# FASCICULE DE BREVET EUROPEEN

(11) **EP 2 118 168 B1**
(45) Date de publication et mention de la délivrance du brevet: **27.06.2012**
(21) Numéro de dépôt: 08762104.1
(22) Date de dépôt: 15.02.2008
(51) Int. Cl.: C08G 63/82, C08G 63/664, C08G 63/08, C08G 69/16, C08G 69/40, C08G 69/44, C09K 3/16, D01F 6/82, D01F 6/84, D01F 6/86

(54) **PROCÉDÉ DE PRÉPARATION D'UN COPOLYMÈRE D'AU MOINS UN MONOMÈRE CYCLIQUE**
VERFAHREN ZUR HERSTELLUNG EINES COPOLYMERS MIT MINDESTENS EINEM ZYKLISCHEN MONOMER
METHOD FOR PRODUCING A COPOLYMER OF AT LEAST ONE CYCLIC MONOMER

(30) Priorité: 16.02.2007 FR 0701149
(43) Date de publication de la demande: 18.11.2009
(73) Titulaire: ARKEMA FRANCE, 92700 Colombes (FR); Centre National de la Recherche Scientifique - CNRS, 75794 Paris Cedex 16 (FR)
(72) Inventeur: MAGNET, Stéphanie, F-64370 Morlanne (FR); NAVARRO, Christophe, F-64990 Lahonce (FR); GAZEAU-BUREAU, Stéphanie, F-31270 Frouzins (FR); MARTIN-VACA, Blanca, F-31100 Toulouse (FR); BOURISSOU, Didier, F-31830 Plaisance Du Touch (FR)
(86) Numéro de dépôt international: PCT/FR2008/050256
(87) Numéro de publication internationale: WO 2008/104724

(56) Documents cités:
- EP-A- 0 899 274
- US-A- 3 557 255
- US-A- 3 655 631
- US-A- 3 657 385
- US-A- 4 452 973
- US-A- 4 873 296
- US-A- 5 183 861
- US-A- 5 254 668
- US-A- 5 399 666
- US-A- 5 416 171
- US-A- 5 840 811
- DATABASE WPI Week 199507 Thomson Scientific, London, GB; AN 1995-048921 XP002451529 & JP 06 329790 A (SANYO CHEM IND LTD) 29 novembre 1994 (1994-11-29)
- DATABASE WPI Week 198614 Thomson Scientific, London, GB; AN 1986-091247 XP002451530 -& JP 61 037814 A (DAICEL CHEM IND LTD) 22 février 1986 (1986-02-22)
- DATABASE WPI Week 199514 Thomson Scientific, London, GB; AN 1995-101942 XP002451531 -& JP 07 025993 A (DAICEL CHEM IND LTD) 27 janvier 1995 (1995-01-27)
- DATABASE WPI Week 199639 Thomson Scientific, London, GB; AN 1996-388624 XP002451532 -& JP 08 188627 A (DAICEL CHEM IND LTD) 23 juillet 1996 (1996-07-23)
- DATABASE WPI Week 199720 Thomson Scientific, London, GB; AN 1997-221821 XP002451533 -& JP 09 067430 A (DAINICHISEIKA COLOR & CHEM MFG) 11 mars 1997 (1997-03-11)
- DATABASE WPI Week 199722 Thomson Scientific, London, GB; AN 1997-241809 XP002451534 -& JP 09 077855 A (DAICEL CHEM IND LTD) 25 mars 1997 (1997-03-25)
- DATABASE WPI Week 199950 Thomson Scientific, London, GB; AN 1999-585977 XP002451535 -& JP 11 255870 A (DAICEL CHEM IND LTD) 21 septembre 1999 (1999-09-21)
- DATABASE WPI Week 200706 Thomson Scientific, London, GB; AN 2007-045950 XP002451536 -& CN 1 775 817 A (UNIV SHANGHAI JIAOTONG) 24 mai 2006 (2006-05-24)
- DATABASE WPI Week 198922 Thomson Scientific, London, GB; AN 1989-163521 XP002451537 -& JP 01 108226 A (MITSUI TOATSU CHEM INC) 25 avril 1989 (1989-04-25)
- DATABASE WPI Week 199227 Thomson Scientific, London, GB; AN 1992-224054 XP002451538 -& JP 04 153215 A (NIPPON KAYAKU KK) 26 mai 1992 (1992-05-26)
- HIKI S ET AL: "Synthesis and characterization of hydroxy-terminated [RS]-poly(3-hydroxybutyrate) and its utilization to block copolymerization with l-lactide to obtain a biodegradable thermoplastic elastomer" POLYMER, ELSEVIER SCIENCE PUBLISHERS B.V, GB, vol. 41, no. 20, septembre 2000 (2000-09), pages 7369-7379, XP004200600 ISSN: 0032-3861

## Description

La présente invention concerne un procédé de préparation de copolymères d'au moins un monomère cyclique choisi parmi les lactones, lactames, lactides ou glycolides, par ouverture de cycle à l'aide d'un macroamorceur portant une fonction hydroxyle ou thiol.

Les copolymères de lactones telles que l'ε-caprolactone sont des polymères présentant un intérêt industriel certain dans divers domaines, en raison notamment de leur biocompatibilité, de leurs propriétés physico-chimiques et de leur bonne stabilité thermique jusqu'à des températures d'au moins 200-250°C.

Un procédé de préparation de ces copolymères a notamment été décrit par Jérome et al. dans Macromol, 2002, 35, 1190-1195. Il consiste à copolymériser la δ-valérolactone avec un macroamorceur qui est le poly(éthylène glycol) ou le monométhoxypoly(éthylène glycol), en présence d'acide chlorhydrique éthéré (HCl·Et₂O) dans le dichlorométhane à 0°C. Ce procédé utilise une concentration en monomère de 3 mol.l⁻¹, 3 équivalents d'acide par rapport aux fonctions hydroxyles du macroamorceur, et les polymères diblocs et triblocs obtenus après 2-3 h présentent des masses maximales Mₙ de 9.500 à 19.000 g/mol, avec un indice de polydispersité de 1,07 à 1,09.

Ce procédé nécessite de mettre en oeuvre une quantité d'acide, par ailleurs corrosif, relativement élevée, qui peut altérer les appareillages utilisés.

D'autres procédés de copolymérisation cationique d'ε-caprolactone ont été proposés, qui font intervenir un acide sulfonique comme catalyseur au lieu de l'acide chlorhydrique.

Un tel procédé a notamment été décrit par Maigorzata Basko et al. dans Journal of Polymer Science : Part A : Polymer Chemistry, Vol. 44, 7071-7081 (2006). Il consiste à faire réagir l'ε-caprolactone et éventuellement le L,L-lactide en présence d'alcool isopropylique et d'acide trifluorométhanesulfonique (triflique), dans le dichlorométhane à 35°C. Des copolymères de caprolactone ayant une masse moléculaire Mₙ allant de 4.780 à 5.900 g.mol et un indice de polydispersité de 1,21 à 1,24 peuvent ainsi être obtenus.

Par ailleurs, la demande WO 2004/067602 divulgue un procédé de (co)polymérisation de lactides et glycolides, mettant en oeuvre un trifluorométhane sulfonate comme catalyseur, en présence d'un additif de (co)polymérisation ou co-amorceur, qui peut être l'eau ou un alcool aliphatique, dans un solvant éventuellement chloré.

Si dans le document JP4-153 215 il est décrit un procédé se rapprochant de la présente invention, les conditions décritent ne permettent pas l'obtention d'un indice de polydisposite aussi faible tel que décrit dans la présente invention.

Il n'est toutefois pas suggéré qu'un procédé des types décrits ci-dessus puisse être utilisé pour préparer dans des conditions généralement douces et avec une cinétique de réaction rapide des copolymères de lactones, lactames, lactides ou glycolides avec des macromonomères utilisés eux-mêmes comme amorceurs, les copolymères obtenus pouvant présenter une masse moléculaire Mₙ élevée (éventuellement supérieure à 20.000 g/mol) et un faible indice de polydispersité (inférieur ou égal à 1,5).

La présente invention a ainsi pour objet un procédé de préparation d'un copolymère présentant un indice de polydispersité inférieur à 1,5 d'au moins un monomère cyclique choisi parmi : une lactone, une lactame, un lactide et un glycolide, comprenant l'étape consistant à faire réagir ledit monomère cyclique avec un amorceur polymérique, en présence d'un composé portant une fonction acide sulfonique, caractérisé en ce que ledit procédé est conduit dans un solvant non chloré et en milieu anhydre, ne mettant pas en oeuvre d'espèces métalliques.

Le procédé selon l'invention peut être qualifié d'organo-catalytique.

En préambule, il est précisé que l'expression « compris(e) entre » utilisée dans le cadre de cette description doit s'entendre comme incluant les bornes citées.

Le procédé selon l'invention comprend la réaction d'une lactone, d'une lactame, d'un lactide ou d'un glycolide avec un amorceur polymérique, ci-après désigné plus simplement par « amorceur ». Par « amorceur », on entend dans la présente description un composé comportant au moins une fonction hydroxyle ou au moins une fonction thiol. Le terme « polymérique » se réfère à une molécule dont la structure comprend essentiellement la répétition multiple d'unités dérivées, effectivement (par tout type de réaction de polymérisation) ou conceptuellement, de molécules de plus faible masse moléculaire. Ce terme englobe aussi bien les polymères (macromolécules) que les oligomères, ces derniers ayant une masse moléculaire plus faible que les premiers.

Par « copolymère », on entend en particulier un polymère dérivé d'au moins deux espèces différentes de monomères ou macromonomères, dont l'une au moins est choisie parmi une lactone, une lactame, un lactide ou un glycolide (ci-après plus simplement désignés par « monomère cyclique ») et l'autre est issue de l'amorceur polymérique.

Des exemples de lactones comprennent plus particulièrement les β-, γ-, δ- et ε-lactones saturées ou insaturées, substituées ou non, comportant de 4 à 12 atomes de carbone, telles que l'ε-caprolactone, la δ-valérolactone, la β-butyrolactone et la γ-butyrolactone. L'ε-caprolactone est préférée pour une utilisation dans la présente invention. Elle peut notamment être obtenue par oxydation de Baeyer-Villiger de la cyclohexanone avec l'acide peracétique.

Des exemples de lactames comprennent plus particulièrement les β-, γ-, δ- et ε-lactames saturées ou insaturées, substituées ou non substituées, renfermant de 4 à 12 atomes de carbone, telles que la caprolactame, la pyrrolidinone, la pipéridone, l'énantholactame et la laurinlactame. La caprolactame est préférée pour une utilisation dans la présente invention. Elle peut être obtenue à partir de cyclohexanoxime, par arrangement de Beckmann, et conduit par polymérisation à la polycaprolactame ou Nylon-6^{®}.

Les lactides utilisés dans la présente invention peuvent se présenter sous une forme racémique, énantiomériquement pure ou méso.

La concentration du monomère cyclique dans le milieu réactionnel peut varier dans une certaine mesure. Il a ainsi été démontré que pour un degré de polymérisation voisin de 40, une concentration élevée en monomère permettait un meilleur contrôle de l'amorçage de la polymérisation par l'amorceur et donc un meilleur contrôle de la polymérisation. Au contraire, dans le cas de degrés de polymérisation plus élevés (notamment supérieurs à 100), un milieu plus dilué en monomère peut devenir plus favorable à un meilleur contrôle. A titre d'exemple, la concentration en monomère cyclique dans le milieu réactionnel peut varier de 0,01 à 9 et de préférence de 0,45 à 3 mol/l voire de 0,45 à 2,7 mol/l.

L'amorceur peut être un oligomère ou un polymère mono- ou polyhydroxylé, notamment choisi parmi : les (alcoxy)polyalkylène glycols, tels que le (méthoxy)polyéthylène glycol (MPEG/PEG), le polypropylène glycol (PPG) et le polytétraméthylène glycol (PTMG) ; les poly(alkyl)alkylène adipate diols tels que le poly(2-méthyl-1,3-propylène adipate)diol (PMPA) et le poly(1,4-butylène adipate)diol (PBA) ; les polydiènes éventuellement hydrogénés, α-hydroxylés ou α,ω-dihydroxylés tels que le polybutadiène α,γ-dihydroxylé ou le polyisoprène α,ω-dihydroxylé ; les polyalkylènes mono- ou polyhydroxylés tels que le polyisobutylène mono- ou polyhydroxylé ; les polylactides contenant des fonctions hydroxy terminales ; les polyhydroxyalcanoates tels que le poly(3-hydroxybutyrate) et le poly(3-hydroxyvalérate) ; les polysaccharides modifiés ou non tels que l'amidon, la chitine, le chitosan, le dextran, et la cellulose ; et leurs mélanges.

En variante, l'amorceur peut être un oligomère ou un polymère portant une ou plusieurs fonctions thiol, tel que les polystyrènes α-thiolés ou α,ω-thiolés, les poly(méth)acrylates α-thiolés ou α,ω-thiolés, les polybutadiènes α-thiolés ou α,ω-thiolés, et leurs mélanges.

Selon une autre possibilité, l'amorceur peut être un co-oligomère ou un copolymère vinylique de la famille des polymères acryliques, méthacryliques, styréniques ou diéniques, qui résulte d'une co-polymérisation entre des monomères acryliques, méthacryliques, styréniques ou diéniques et des monomères fonctionnels présentant un groupement hydroxyle, tels que des monomères acryliques ou méthacryliques hydroxylés, comme par exemple le 4-hydroxybutyl acrylate, l'hydroxyéthyl acrylate et l'hydroxyéthyl méthacrylate. Cette polymérisation pourra s'effectuer selon un procédé radicalaire conventionnel, un procédé radicalaire contrôlé ou un procédé anionique.

Selon une autre possibilité encore, l'amorceur peut être un copolymère vinylique obtenu par polymérisation radicalaire contrôlée dans laquelle l'amorceur radicalaire et/ou l'agent de contrôle portent au moins une fonction hydroxyle ou thiol.

Les oligomères et polymères utilisés comme amorceurs peuvent avoir, par exemple, une masse moléculaire moyenne en nombre allant de 1.000 à 100.000 g/mol, par exemple de 1.000 à 20.000 g/mol et un indice de polydispersité allant de 1 à 3 et par exemple de 1 à 2,6.

L'utilisation de tels oligomères ou polymères permet d'obtenir des copolymères à blocs linéaires, en étoile ou greffés, selon la disposition de la ou des fonction(s) hydroxyle ou thiol sur l'amorceur polymérique.

De préférence, le rapport molaire du monomère cyclique à l'amorceur polymérique va de 5 à 500, plus préférentiellement de 10 à 200 et, mieux, de 40 à 100.

Le procédé selon l'invention est réalisé en milieu anhydre. Il est par ailleurs conduit dans un solvant non chloré qui est avantageusement un solvant aromatique tel que le toluène, l'éthylbenzène ou le xylène, mais qui peut en variante être un solvant non aromatique tel que les cétones (dont la méthyléthylcétone et la méthylisobutylcétone) et les éthers et polyéthers éventuellement cycliques (dont le méthyl tertio-butyl éther, le tétrahydrofurane, le dioxane et le diméthoxyéthane). Le toluène est préféré pour une utilisation dans la présente invention. Il a en effet été démontré que ce type de solvant permettait notamment d'accélérer la polymérisation.

En outre, les réactifs utilisés dans ce procédé sont de préférence séchés avant leur mise en oeuvre, notamment par traitement sous vide, distillation ou séchage par un dessicant inerte.

Le procédé selon l'invention nécessite l'emploi d'un catalyseur, qui comprend ou est de préférence constitué, d'un composé portant une fonction acide sulfonique. Par l'expression « fonction acide sulfonique », on entend une fonction acide libre et non un sel. Il s'agit de préférence d'un composé de formule R-SO₃H où R désigne :
- un groupe alkyle linéaire renfermant de 1 à 20 atomes de carbone ou un groupe alkyle ramifié ou cyclique renfermant de 3 à 20 atomes de carbone, éventuellement substitués par un ou plusieurs substituants indépendamment choisis parmi des groupes oxo et halo, comme par exemple le fluor, le chlore, le brome ou l'iode, ou
- un groupe aryle éventuellement substitué par au moins :
   - un substituant alkyle linéaire renfermant de 1 à 20 atomes de carbone ou un groupe alkyle ramifié ou cyclique renfermant de 3 à 20 atomes de carbone, ledit substituant alkyle étant lui-même éventuellement substitué par au moins un groupement halogéné choisi parmi le fluor, le chlore, le brome ou l'iode ou par un groupement nitro, ou
   - un groupement halogéné choisi parmi le fluor, le chlore, le brome ou l'iode, ou
   - un groupement nitro.

L'acide (trifluoro)méthane sulfonique et l'acide para-toluène sulfonique sont préférés pour une utilisation dans la présente invention.

Il s'agit préférentiellement d'un processus de catalyse homogène, en ce sens que le catalyseur se présente habituellement dans la même phase que les réactifs (monomère cyclique et amorceur) et non sous forme supportée. Il est possible de faire varier la quantité de catalyseur mise en oeuvre dans le procédé pour ajuster le temps de réaction sans affecter le contrôle de la polymérisation. Habituellement, on préfère toutefois que le rapport molaire du composé portant la fonction acide sulfonique à chaque fonction hydroxyle ou thiol de l'amorceur soit compris entre 0,5 et 1. Le catalyseur peut être aisément éliminé en fin de réaction par neutralisation à l'aide d'une base organique encombrée telle que la diisopropyléthylamine (DIEA) puis élimination des sels d'ammonium ainsi formés, de préférence par lavage aqueux.

On préfère que le procédé selon l'invention ne mette pas en oeuvre d'espèce métallique.

Ce procédé est de préférence conduit à une température allant de 20 à 105°C, plus préférentiellement de 25°C à 65°C et, mieux, de 25°C à 50°C. Il a en effet été démontré qu'il était possible d'obtenir à ces températures, par exemple à environ 30°C, des copolymères ayant des masses moléculaires Mₙ supérieures à 14.000 g/mol en 3 à 4 heures seulement, et avec un rendement d'au moins 90%, voire de près de 99%, sans qu'il soit nécessaire de travailler sous pression. Il s'agit là d'un avantage considérable du procédé selon l'invention.

Ce procédé est en outre de préférence conduit sous agitation. Il peut être mis en oeuvre en continu ou de façon discontinue.

Les copolymères préparés selon la présente invention présentent une masse moléculaire moyenne en nombre notée Mn, mesurée par chromatographie par perméation de gel (ou GPC), contrôlée par le rapport molaire du monomère à l'amorceur et qui peut être supérieure à 9.000 g/mol, et/ou un indice de polydispersité, traduisant la bonne homogénéité des longueurs de chaîne du polymère, inférieur à 1,5.

Ils peuvent être utilisés dans une diversité d'applications, et en particulier comme membranes pour le traitement d'effluents liquides ou gazeux ou dans des systèmes électrochimiques de stockage d'énergie tels que des batteries lithium-ion, des supercondensateurs ou des piles à combustibles ; comme matériaux biocompatibles utilisables notamment dans le domaine pharmaceutique ou cosmétique, en particulier pour la fabrication de systèmes de vectorisation d'actifs ou comme matériau de suture ; comme additifs dans les matières plastiques et en particulier comme additifs antistatiques pour des résines polymères comme les polyesters, les polycarbonates, les polyamides ou les poly(meth)acrylates, comme composés améliorant la résistance aux chocs des résines telles que les polycarbonates transparents ou non, les polyesters, les polyamides ou les poly(meth)acrylates, ou comme plastifiants du PVC ; i ou encore pour la fabrication de fibres textiles.

L'invention sera maintenant illustrée par les exemples non limitatifs suivants.

### EXEMPLES

### Préparation de copolymères d'ε-caprolactone

La procédure générale suivante a été utilisée pour mettre en oeuvre les procédés décrits ci-après.

Les alcools et le toluène ont été distillés sur sodium. L'ε-caprolactone a été séchée et distillée sur dihydrure de calcium (CaH₂). Le MPEG et le PEG ont été séchés sur un dessicateur sous vide en présence de P₂O₅. Le PTMG a été séché sous vide à 80°C. Les acides sulfoniques ont été utilisés sans purification complémentaire. La diisopropyl amine (DIEA) a été séchée et distillée sur dihydrure de calcium (CaH₂) et conservée sur hydroxyde de potassium (KOH).

Les tubes de Schlenk ont été séchés au pistolet chauffant sous vide afin d'éliminer toute trace d'humidité.

La réaction a été suivie par RMN ¹H, réalisée sur un appareil BRUKER AVANCE 300, et GPC, effectuée sur un appareil WATERS 712 WISP, réglé à 40°C, 1 ml/min, en utilisant un étalonnage au polystyrène. Pour ce faire, des échantillons ont été prélevés, neutralisés à la DIEA, évaporés et repris dans un solvant adéquat en vue de leur caractérisation. La RMN ¹H permet de quantifier les degrés de polymérisation (DP) des monomères en faisant le rapport d'intégration des signaux des -CH₂- portant la fonction C=O aux signaux des protons des -CH₂- portant la fonction -OH initialement sur l'amorceur. Les spectres sont enregistrés dans le chloroforme deutéré, sur un spectromètre à 300 MHz. La GPC dans le THF permet de déterminer la masse moléculaire moyenne en nombre Mₙ et le degré de polydispersité (PDI) des échantillons.

### Exemple 1 :

A une solution de 1,32g (1éq.) de PEG (Mₙ ∼ 17.000 g/mol, PDI = 1,07) dans 11ml de toluène, sont ajoutés successivement 580µl d'ε-caprolactone (40éq., 0,45 mol.l⁻¹) et 12µl d'acide trifluorométhanesulfonique (1éq.). Le milieu réactionnel est agité sous argon à 50°C jusqu'à conversion totale du monomère établie à partir de la RMN, soit 4h.
Conversion : ≥ 99%
RMN ¹H : DP = 41
GPC : Mₙ = 25.350 g/mol, PDI = 1,14

### Exemple 2 :

A une solution de 0,17g (1éq.) de PTMG (Mₙ = 2.610 g/mol, PDI = 2,09.) dans 5,5ml de toluène, sont ajoutés successivement 610µl d'ε-caprolactone (40éq., 0,9 mol.l⁻¹) et 9µl d'acide méthanesulfonique (1éq.). Le milieu réactionnel est agité sous argon à 30°C jusqu'à conversion totale du monomère établie à partir de la RMN, soit 1h.
Conversion : ≥ 99%
RMN ¹H : DP = 40
GPC : Mₙ = 10.380 g/mol, PDI = 1,16

### Exemple 3 :

A une solution de 0,265 g (1 éq.) de PMPA (Mₙ séché = 3.450 g/mol, PDI = 2,01) dans 5 ml de toluène, sont ajoutés successivement 560 µl d'ε-caprolactone (45 éq., 0,9 mol.l⁻¹) et 11 µl d'acide trifluorométhanesulfonique (1 éq.). Le milieu réactionnel est agité sous argon à 30°C jusqu'à conversion totale du monomère établie à partir de la RMN, soit 1h.
Conversion : ≥ 99%
RMN ¹H : DP = 42
GPC : Mₙ = 11.260 g/mol, PDI = 1,20

### Exemple 4 :

A une solution de 0,135 g (1 éq.) de PBA (Mₙ séché = 2.160 g/mol, PDI = 1,90) dans 5 ml de toluène, sont ajoutés successivement 550 µl d'ε-caprolactone (40 éq., 0,9 mol.l⁻¹) et 11 µl d'acide trifluorométhanesulfonique (1 éq.). Le milieu réactionnel est agité sous argon à 30°C jusqu'à conversion totale du monomère établie à partir de la RMN, soit 1h05.
Conversion : ≥ 99%
RMN ¹H : DP = 39
GPC : Mₙ = 9.660 g/mol, PDI = 1,16

### Exemple 5 :

A une solution de 0,50g (1éq.) de MPEG (Mₙ ∼ 8.100 g/mol, PDI = 1,05) dans 8,9ml de toluène, sont ajoutés successivement 440 µl d'ε-caprolactone (40éq., 0,45 mol.l⁻¹) et 9µl d'acide trifluorométhanesulfonique (1éq.). Le milieu réactionnel est agité sous argon à 50°C jusqu'à conversion totale du monomère établie à partir de la RMN, soit 3h.
Conversion : ≥ 98%
RMN ¹H : DP = 40
GPC : Mₙ = 15.080 g/mol, PDI = 1,15

### Exemple 6 :

A une solution de 68mg (1éq.) de polybutadiène Poly bd^{®}-R20 LM (polybutadiène de faible masse moléculaire, α-, ω-hydroxylé, de Sartomer) (M∼1.200 g/mol, Mₙ∼2.300 g/mol, PDI = 2,54) dans 4,5ml de toluène, sont ajoutés successivement 500µl d'ε-caprolactone (80éq., 0,9 mol.l⁻¹) et 4µl d'acide méthanesulfonique (1éq.). Le milieu réactionnel est agité sous argon à 30°C pendant 4h (conversion : 100%). Le milieu est neutralisé et évaporé.
Caractérisation du produit obtenu par RMN¹H : DP = 65
GPC : Mₙ = 14.850 g/mol, PDI = 1,40

### Exemple 7 :

A une solution de 164mg (1éq.) de Poly Bd^{®} R45 (polybutadiène de faible masse moléculaire, α-, ω-hydroxylé, de Sartomer) (M∼2.800 g/mol, Mₙ∼5.400 g/mol, PDI = 2,45) dans 4,7ml de toluène, sont ajoutés successivement 520µl d'ε-caprolactone (80éq., 0,9 mol.l⁻¹) et 4µl d'acide méthanesulfonique (1éq.). Le milieu réactionnel est agité sous argon à 30°C pendant 4h (conversion : 100%). Le milieu est neutralisé et évaporé.
RMN : DP = 53
GPC : Mₙ = 19.800 G :mol, PDI = 1,36

Ces exemples montrent qu'il est possible d'obtenir en environ une heure seulement des copolymères ayant des masses moléculaires inférieures à 12.000 g/mol et en au plus quatre heures des copolymères ayant des masses moléculaires supérieures à 14.000 g/mol voire à 20.000 g/mol, avec un indice de polydispersité qui reste inférieur ou égal à 1,4.

## Revendications

1. Procédé de préparation d'un copolymère présentant un indice de polydispersité inférieur à 1.5 d'au moins un monomère cyclique choisi parmi : une lactone, une lactame, un lactide et un glycolide, comprenant l'étape consistant à faire réagir ledit monomère cyclique avec un amorceur polymérique, en présence d'un composé portant une fonction acide sulfonique, **caractérisé en ce que** ledit procédé est conduit dans un solvant non chloré et en milieu anhydre, ne mettant pas en oeuvre d'espèces métalliques.

2. Procédé selon la revendication 1, **caractérisé en ce que** la lactone est choisie parmi : l'ε-caprolactone, la δ-valérolactone, la β-butyrolactone et la γ-butyrolactone.

3. Procédé selon la revendication 2, **caractérisé en ce que** la lactone est l'ε-caprolactone.

4. Procédé selon la revendication 1, **caractérisé en ce que** la lactame est choisie parmi : la caprolactame, l'énantholactame, la laurinlactame, la pyrrolidinone et la pipéridone.

5. Procédé selon la revendication 1, **caractérisé en ce que** le monomère cyclique est choisi parmi : les lactides sous forme racémique, énantiomériquement pure ou méso, et le glycolide.

6. Procédé selon l'une quelconque des revendications 1 à 5, **caractérisé en ce que** l'amorceur polymérique est un polymère comportant au moins une fonction hydroxyle.

7. Procédé selon la revendication 6, **caractérisé en ce que** l'amorceur polymérique est un oligomère ou un polymère mono- ou polyhydroxylé, choisi parmi : les (alcoxy)polyalkylène glycols ; les poly(alkyl)alkylène adipate diols ; les polydiènes éventuellement hydrogénés, α-hydroxylés ou α,ω-dihydroxylés ; les polyalkylènes mono- ou polyhydroxylés ; les polylactides contenant des fonctions hydroxy terminales ; les polyhydroxyalcanoates ; les polysaccharides modifiés ou non ; et leurs mélanges.

8. Procédé selon la revendication 7, **caractérisé en ce que** le polymère comportant au moins une fonction hydroxyle est choisi parmi le (méthoxy)polyéthylène glycol, le polypropylène glycol, le polytétraméthylène glycol, le poly(2-méthyl-1,3-propylène adipate)diol, le poly(1,4-butylène adipate)diol, le polybutadiène α,ω-dihydroxylé, le polyisoprène α,ω-dihydroxylé, le polyisobutylène mono- ou polyhydroxylé, le poly(3-hydroxybutyrate), le poly(3-hydroxyvalérate), l'amidon, la chitine, le chitosan, le dextran, la cellulose et leurs mélanges.

9. Procédé selon l'une quelconque des revendications 1 à 5, **caractérisé en ce que** l'amorceur polymérique est un polymère comportant au moins une fonction thiol.

10. Procédé selon la revendication 9, **caractérisé en ce que** l'amorceur polymérique est choisi parmi : les polystyrènes α-thiolés ou α,ω-thiolés, les poly(méth)acrylates α-thiolés ou α,ω-thiolés, les polybutadiènes α-thiolés ou α,ω-thiolés, et leurs mélanges.

11. Procédé selon l'une quelconque des revendications 1 à 10, **caractérisé en ce que** l'amorceur polymérique est un co-oligomère ou un copolymère vinylique de la famille des polymères acryliques, méthacryliques, styréniques ou diéniques, qui résulte d'une co-polymérisation entre des monomères acryliques, méthacryliques, styréniques ou diéniques et des monomères fonctionnels présentant un groupement hydroxyle.

12. Procédé selon l'une quelconque des revendications 1 à 11, **caractérisé en ce que** le composé portant une fonction acide sulfonique est un composé de formule R-SO₃H où R désigne :
- un groupe alkyle linéaire renfermant de 1 à 20 atomes de carbone ou un groupe alkyle ramifié ou cyclique renfermant de 3 à 20 atomes de carbone, éventuellement substitués par un ou plusieurs substituants indépendamment choisis parmi des groupes oxo et halo, comme par exemple le fluor, le chlore, le brome ou l'iode, ou
- un groupe aryle éventuellement substitué par au moins :
• un substituant alkyle linéaire renfermant de 1 à 20 atomes de carbone ou un groupe alkyle ramifié ou cyclique renfermant de 3 à 20 atomes de carbone, ledit substituant alkyle étant lui-même éventuellement substitué par au moins un groupement halogéné choisi parmi le fluor, le chlore, le brome ou l'iode ou par un groupement nitro, ou
• un groupement halogéné choisi parmi le fluor, le chlore, le brome ou l'iode, ou
• un groupement nitro.

13. Procédé selon la revendication 12, **caractérisé en ce que** le composé portant une fonction acide sulfonique est l'acide (trifluoro)méthane sulfonique ou l'acide para-toluène sulfonique.

14. Procédé selon l'une quelconque des revendications 1 à 13, **caractérisé en ce que** le rapport molaire du monomère cyclique à l'amorceur polymérique va de 5 à 500, de préférence de 10 à 200 et plus préférentiellement de 40 à 100.

15. Procédé selon l'une quelconque des revendications 1 à 14, **caractérisé en ce qu'**il est conduit dans un solvant aromatique non chloré tel que le toluène, l'éthylbenzène ou le xylène.

16. Procédé selon l'une quelconque des revendications 1 à 15, **caractérisé en ce que** le rapport molaire du composé portant une fonction acide sulfonique à chaque fonction hydroxyle ou thiol de l'amorceur polymérique est de 1.

17. Procédé selon l'une quelconque des revendications 1 à 16, **caractérisé en ce qu'**il est mis en oeuvre à une température allant de 25°C à 50°C.

## Claims

1. Process for the preparation of a copolymer exhibiting a polydispersity index of less than 1.5, of at least one cyclic monomer chosen from a lactone, a lactam, a lactide and a glycolide, comprising the stage consisting in reacting said cyclic monomer with a polymeric initiator in the presence of a compound carrying a sulfonic acid functional group, **characterized in that** said process is carried out in a nonchlorinated solvent and in an anhydrous medium and does not employ metal entities.

2. Process according to Claim 1, **characterized in that** the lactone is chosen from ε-caprolactone, δ-valerolactone, β-butyrolactone and γ-butyrolactone.

3. Process according to Claim 2, **characterized in that** the lactone is ε-caprolactone.

4. Process according to Claim 1, **characterized in that** the lactam is chosen from caprolactam, enantholactam, laurinlactam, pyrrolidinone and piperidone.

5. Process according to Claim 1, **characterized in that** the cyclic monomer is chosen from lactides, in the racemic, enantiomerically pure or meso form, and glycolide.

6. Process according to any one of Claims 1 to 5, **characterized in that** the polymeric initiator is a polymer comprising at least one hydroxyl functional group.

7. Process according to Claim 6, **characterized in that** the polymeric initiator is a mono- or polyhydroxylated oligomer or polymer chosen from (alkoxy)polyalkylene glycols; poly(alkyl)alkylene adipate diols; α-hydroxylated or α,ω-dihydroxylated polydienes which are optionally hydrogenated; mono- or polyhydroxylated polyalkylenes; polylactides comprising end hydroxyl functional groups; polyhydroxyalkanoates; modified or unmodified polysaccharides; and their blends.

8. Process according to Claim 7, **characterized in that** the polymer comprising at least one hydroxyl functional group is chosen from (methoxy)polyethylene glycol, polypropylene glycol, polytetramethylene glycol, poly(2-methyl-1,3-propylene adipate) diol, poly(1,4-butylene adipate) diol, α,ω-dihydroxylated polybutadiene, α,ω-dihydroxylated polyisoprene, mono- or polyhydroxylated polyisobutylene, poly(3-hydroxybutyrate), poly(3-hydroxyvalerate), starch, chitin, chitosan, dextran, cellulose and their blends.

9. Process according to any one of Claims 1 to 5, **characterized in that** the polymeric initiator is a polymer comprising at least one thiol functional group.

10. Process according to Claim 9, **characterized in that** the polymeric initiator is chosen from α-thiolated or αω-thiolated polystyrenes, α-thiolated or αω-thiolated poly(meth)acrylates, α-thiolated or αω-thiolated polybutadienes, and their blends.

11. Process according to any one of Claims 1 to 10, **characterized in that** the polymeric initiator is a vinyl cooligomer or copolymer of the family of the acrylic, methacrylic, styrene or diene polymers which results from copolymerization between acrylic, methacrylic, styrene or diene monomers and functional monomers exhibiting a hydroxyl group.

12. Process according to any one of Claims 1 to 11, **characterized in that** the compound carrying a sulfonic acid functional group is a compound of formula R-SO₃H where R denotes:
- a linear alkyl group including from 1 to 20 carbon atoms or a branched or cyclic alkyl group including from 3 to 20 carbon atoms which are optionally substituted by one or more substituents chosen independently from oxo and halo groups, such as, for example, fluorine, chlorine, bromine or iodine, or
- an aryl group optionally substituted by at least:
• one linear alkyl substituent including from 1 to 20 carbon atoms or one branched or cyclic alkyl group including from 3 to 20 carbon atoms, said alkyl substituent being itself optionally substituted by at least one halogen group chosen from fluorine, chlorine, bromine or iodine or by a nitro group, or
• one halogen group chosen from fluorine, chlorine, bromine or iodine, or
• one nitro group.

13. Process according to Claim 12, **characterized in that** the compound carrying a sulfonic acid functional group is (trifluoro)methanesulfonic acid or paratoluenesulfonic acid.

14. Process according to any one of Claims 1 to 13, **characterized in that** the molar ratio of the cyclic monomer to the polymeric initiator ranges from 5 to 500, preferably from 10 to 200 and more preferably from 40 to 100.

15. Process according to any one of Claims 1 to 14, **characterized in that** it is carried out in a nonchlorinated aromatic solvent, such as toluene, ethylbenzene or xylene.

16. Process according to any one of Claims 1 to 15, **characterized in that** the molar ratio of the compound carrying a sulfonic acid functional group to each hydroxyl or thiol functional group of the polymeric initiator is 1.

17. Process according to any one of Claims 1 to 16, **characterized in that** it is carried out at a temperature ranging from 25°C to 50°C.

## Patentansprüche

1. Verfahren zur Herstellung eines einen Polydispersitätsindex von weniger als 1,5 aufweisenden Copolymers von mindestens einem unter einem Lacton, einem Lactam, einem Lactid und einem Glycolid ausgewählten cyclischen Monomer, bei dem man das cyclische Monomer in Gegenwart einer Verbindung mit einer Sulfonsäurefunktion mit einem polymeren Initiator umsetzt, **dadurch gekennzeichnet, dass** man das Verfahren in einem nichtchlorierten Lösungsmittel und in wasserfreiem Milieu ohne Verwendung von Metallspezies durchführt.

2. Verfahren nach Anspruch 1, **dadurch gekennzeichnet, dass** man das Lacton unter ε-Caprolacton, δ-Valerolacton, β-Butyrolacton und γ-Butyrolacton auswählt.

3. Verfahren nach Anspruch 2, **dadurch gekennzeichnet, dass** es sich bei dem Lacton um ε-Caprolacton handelt.

4. Verfahren nach Anspruch 1, **dadurch gekennzeichnet, dass** man das Lactam unter Caprolactam, Enantholactam, Laurinlactam, Pyrrolidinon und Piperidon auswählt.

5. Verfahren nach Anspruch 1, **dadurch gekennzeichnet, dass** man das cyclische Monomer unter Lactiden in racemischer Form, enantiomerenreiner Form oder meso-Form und Glykolid auswählt.

6. Verfahren nach einem der Ansprüche 1 bis 5, **dadurch gekennzeichnet, dass** es sich bei dem polymeren Initiator um ein Polymer mit mindestens einer Hydroxylfunktion handelt.

7. Verfahren nach Anspruch 6, **dadurch gekennzeichnet, dass** es sich bei dem polymeren Initiator um ein mono- oder polyhydroxyliertes Oligomer oder Polymer handelt, das unter (Alkoxy)polyalkylenglykolen; Poly(alkyl)alkylenadipatdiolen; gegebenenfalls hydrierten, α-hydroxylierten oder α,ω-dihydroxylierten Polydienen; mono- oder polyhydroxylierten Polyalkylenen; Polylactiden mit endständigen Hydroxyfunktionen; Polyhydroxyalkanoaten; modifizierten oder unmodifizierten Polysacchariden und Mischungen davon ausgewählt wird.

8. Verfahren nach Anspruch 7, **dadurch gekennzeichnet, dass** man das Polymer mit mindestens einer Hydroxylfunktion unter (Methoxy)polyethylenglykol, Polypropylenglykol, Polytetramethylenglykol, Poly-(2-methyl-1,3-propylenadipat)diol, Poly(1,4-butylenadipat)diol, α,ω-dihydroxyliertem Polybutadien, α,ω-dihydroxyliertem Polyisopren, mono- oder polyhydroxyliertem Polyisobutylen, Poly(3-hydroxybutyrat), Poly(3-hydroxyvalerat), Stärke, Chitin, Chitosan, Dextran, Cellulose und Mischungen davon auswählt.

9. Verfahren nach einem der Ansprüche 1 bis 5, **dadurch gekennzeichnet, dass** es sich bei dem polymeren Initiator um ein Polymer mit mindestens einer Thiolfunktion handelt.

10. Verfahren nach Anspruch 9, **dadurch gekennzeichnet, dass** man den polymeren Initiator unter α-thiolierten oder α,ω-thiolierten Polystyrolen, α-thiolierten oder α,ω-thiolierten Poly(meth)acrylaten, α-thiolierten oder α,ω-thiolierten Polybutadienen und Mischungen davon auswählt.

11. Verfahren nach einem der Ansprüche 1 bis 10, **dadurch gekennzeichnet, dass** es sich bei dem polymeren Initiator um ein Vinylcooligomer oder -copolymer aus der Familie der Acryl-, Methacryl-, Styrol- oder Dienpolymere, die sich aus einer Copolymerisation zwischen Acryl-, Methacryl-, Styrol- oder Dienmonomeren und funktionellen Monomeren mit einer Hydroxylgruppe ergeben, handelt.

12. Verfahren nach einem der Ansprüche 1 bis 11, **dadurch gekennzeichnet, dass** es sich bei der Verbindung mit einer Sulfonsäurefunktion um eine Verbindung der Formel R-SO₃H handelt, wobei R für
- eine lineare Alkylgruppe mit 1 bis 20 Kohlenstoffatomen oder eine verzweigte oder cyclische Alkylgruppe mit 3 bis 20 Kohlenstoffatomen, wobei diese Gruppen gegebenenfalls durch einen oder mehrere Substituenten, die unabhängig voneinander unter Oxo- und Halogengruppen, wie zum Beispiel Fluor, Chlor, Brom oder Iod, ausgewählt sind, substituiert sind, oder
- eine Arylgruppe, die gegebenenfalls durch mindestens
• einen linearen Alkylsubstituenten mit 1 bis 20 Kohlenstoffatomen oder eine verzweigte oder cyclische Alkylgruppe mit 3 bis 20 Kohlenstoffatomen, wobei der Alkylsubstituent selbst gegebenenfalls durch mindestens eine Halogengruppe, die unter Fluor, Chlor, Brom oder Iod, ausgewählt ist, oder eine Nitrogruppe substituiert ist, oder
• eine Halogengruppe, die unter Fluor, Chlor, Brom oder Iod, ausgewählt ist, oder
• eine Nitrogruppe substituiert ist,
steht.

13. Verfahren nach Anspruch 12, **dadurch gekennzeichnet, dass** es sich bei der Verbindung mit einer Sulfonsäurefunktion um (Trifluor)methansulfonsäure oder para-Toluolsulfonsäure handelt.

14. Verfahren nach einem der Ansprüche 1 bis 13, **dadurch gekennzeichnet, dass** das Molverhältnis von cyclischem Monomer zu polymerem Initiator 5 bis 500, vorzugsweise 10 bis 200 und weiter bevorzugt 40 bis 100 beträgt.

15. Verfahren nach einem der Ansprüche 1 bis 14, **dadurch gekennzeichnet, dass** man es in einem nichtchlorierten aromatischen Lösungsmittel wie Toluol, Ethylbenzol oder Xylol durchführt.

16. Verfahren nach einem der Ansprüche 1 bis 15, **dadurch gekennzeichnet, dass** das Molverhältnis von Verbindung mit einer Sulfonsäurefunktion zu jeder Hydroxyl- oder Thiolfunktion des polymeren Initiators 1 beträgt.

17. Verfahren nach einem der Ansprüche 1 bis 16, **dadurch gekennzeichnet, dass** man es bei einer Temperatur von 25°C bis 50°C durchführt.
